# FASCICULE DE BREVET EUROPEEN

(11) **EP 4 055 449 B1**
(45) Date de publication et mention de la délivrance du brevet: **09.04.2025**
(21) Numéro de dépôt: 20796848.8
(22) Date de dépôt: 30.10.2020
(51) Int. Cl.: G04G 9/00, G04G 17/04, G04G 99/00, G06F 3/14

(54) **PROCEDE DE GESTION D'UNE INTERFACE D'AFFICHAGE**
STEUERUNGSVERFAHREN EINER ANZEIGESCHNITTSTELLE
METHOD FOR MANAGING A DISPLAY INTERFACE

(30) Priorité: 08.11.2019 EP 19208052
(43) Date de publication de la demande: 14.09.2022
(73) Titulaire: Tissot S.A., 2400 Le Locle (CH)
(72) Inventeur: FRANZI, Edoardo, 1400 Cheseaux-Noréaz (CH); KOLLER, Jean-Marc, 1400 Yverdon-les-Bains (CH)
(74) Mandataire: ICB SA
(86) Numéro de dépôt international: PCT/EP2020/080565
(87) Numéro de publication internationale: WO 2021/089437

(56) Documents cités:
- US-A1- 2014 355 819
- US-A1- 2015 084 837
- US-A1- 2018 024 800

## Description

### Domaine technique

L'invention concerne un procédé de gestion d'une interface d'affichage formée d'une pluralité d'écrans de montres connectées portées par des utilisateurs localisés en un même lieu.

L'invention concerne aussi un programme d'ordinateur mettant en œuvre un tel procédé.

### Arrière-plan technologique

Lors du déroulement d'animations visuelles et/ou sonores tels que des spectacles du types concerts ou encore évènements sportifs, il est courant que des dispositifs électroniques tels que des ordiphones, des caméras vidéo ou encore des appareils photographiques soient brandis par des personnes du public, notamment pour immortaliser des instants de ces spectacles.

Cependant, une tel usage de ces dispositifs lors de ces spectacles à pour inconvénient majeur d'engendrer systématiquement une pollution visuelle venant alors perturber leur bon déroulement.

Dans ces conditions, on comprend qu'il existe un réel besoin de trouver une solution permettant de surmonter ces inconvénients de l'art antérieur. US 2018/024800 A1 divulgue un procédé de gestion d'une interface d'affichage formée d'une pluralité d'écrans d'affichage.

### Résumé de l'invention

Un des buts de la présente invention est par conséquent de proposer un procédé qui vise à mettre à profit les écrans de montres connectées pour contribuer au show visuel de telles animations visuelles et/ou sonores, selon la revendication 1. Les modes de réalisation préférés sont définis dans les revendications 2 à 9.

L'invention concerne aussi un programme d'ordinateur, selon la revendication 10, comprenant des instructions de code de programme pour l'exécution de telles étapes du procédé lorsque ledit programme est exécuté par les unités de traitement d'une montre connectée et d'un serveur de gestion de l'interface d'affichage.

### Brève description des figures

L'invention sera décrite ci-après de manière plus détaillée à l'aide d'un dessin annexé, donné à titre d'exemple nullement limitatif, dans lequel :

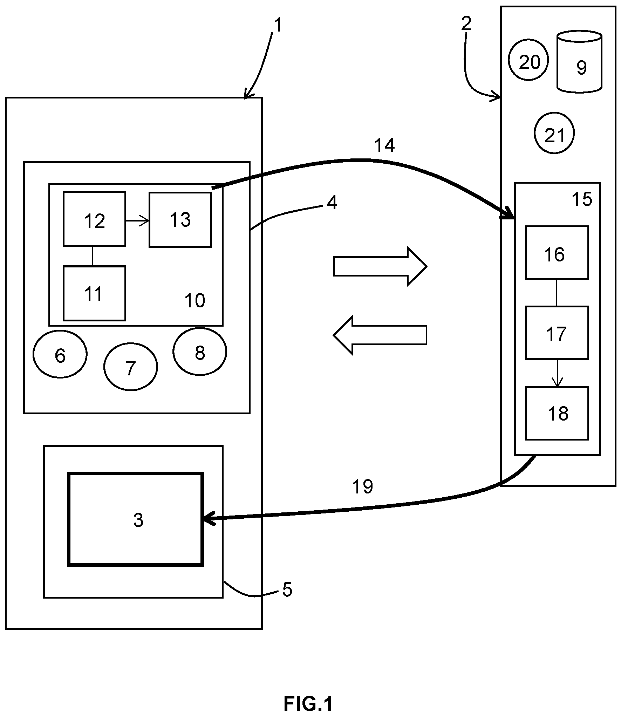

- La figure 1 est une représentation relative à un procédé de gestion d'une interface d'affichage formée d'une pluralité d'écrans de montres connectées portées par des utilisateurs localisés en un même lieu, selon un mode de réalisation de la présente invention.

### Description détaillée de l'invention

Sur la figure 1, est illustré un procédé de gestion d'une interface d'affichage formée d'une pluralité d'écrans 3 d'affichage de montres connectées 1 portées par des utilisateurs localisés en un même lieu. Dans ce contexte, les montres sont donc localisées à proximité les unes des autres pour former cette interface d'affichage. De telles montres connectées sont portées sur des parties du corps des utilisateurs. Ces parties sont susceptibles d'être en mouvement ou sont en mouvement et peuvent comprendre par exemple le poignet, la cheville, le bras, le pied, le cou, la jambe ou le bras de chacun des utilisateurs. Une telle interface d'affichage est donc formée par l'ensemble des écrans 3 des montres connectées 1 d'utilisateurs qui sont tous situés en un même endroit/emplacement/lieu. On comprend donc que les utilisateurs portant chacun une montre connectée 1, peuvent être regroupés dans une salle de concert ou dans une arène ou encore un stade où doit se dérouler par exemple une représentation sportive.

Dans ce procédé, le message visuel est affiché par l'ensemble des écrans 3 formant l'interface d'affichage. Chaque écran 3 représente un écran secondaire 3 de la montre connectée. Cet écran secondaire 3, n'est pas défini pour afficher des informations destinées spécifiquement ou exclusivement à l'utilisateur de ladite montre. De telles informations sont relatives aux fonctions réalisées par la montre 1 telles que des informations horaires, informations d'alarme, informations de géolocalisation, informations de météorologie, informations de santé (pression artérielle, fréquence cardiaque, oxymétrie de pouls, électrocardiogramme), informations d'activité, informations d'entraînement sportif ou « coaching sportif », etc... comme peut l'être ici un écran principal 4 de la montre 1. En effet, un tel écran 3 est agencé dans la montre 1, par exemple dans le bracelet 5 de cette dernière, en étant configuré pour être contrôlé/administré par un serveur de gestion 2 de l'interface d'affichage compris sur une plateforme technique distante. Cet écran 3 est du type matrice active et comprend des électrodes électroluminescentes. Il est de plus déformable et étirable. Dans ces conditions, on comprend que chacun de ces écrans 3 est de préférence spécifiquement dédié et configuré pour réaliser un tel affichage. Autrement dit, les écrans référencés 3 de ces montres connectées ont chacun pour unique fonction d'afficher une portion du message visuel transmis par le serveur de gestion. En outre, ces écrans 3 ont chacun pour unique fonction et/ou destination de constituer ladite interface d'affichage.

Ce message visuel est différent de fonctions réalisées par la montre 1 du fait notamment que leur diffusion ne résulte pas d'une configuration préalable d'une application informatique de la montre par l'utilisateur ou encore d'une interaction entre l'interface de saisie de cette montre 1 et l'utilisateur. De plus ces messages visuels ne sont pas destinés exclusivement au porteur de la montre 1 comme peut l'être une fonction de la montre1 telle qu'une alarme. Dans le contexte de ce mode de réalisation, chaque message visuel est relatif à une animation visuelle et/ou sonore (par exemple un évènement sportif, culturel, un spectacle, un concert, etc...) compris/ organisée dans un environnement/emplacement/lieu où est localisée ladite montre 1. Ainsi que nous l'avons déjà évoqué, ce message visuel est destiné à une interface d'affichage formée par plusieurs écrans de montres connectées 1 agencées dans un environnement/emplacement/lieu proche de la montre connectée 1. De plus, ce message visuel vise par exemple à apporter une contribution visuelle aux animations visuelles et/ou sonores. On comprend donc que le contenu de ce message visuel est en rapport direct avec l'animation visuelle et/ou sonore comprise dans l'environnement où est localisée la montre connectée 1 et donc l'utilisateur de la montre 1. Un tel contenu peut être synchronisé ou coordonné avec cette animation visuelle et/ou sonore. A titre d'exemple, une tel message visuel comprend une représentation graphique animée ou statique. De manière non limitative et non exhaustive, ce message comprend une image comprenant des objets ou un motif lumineux ou encore une figuration symbolique d'une émotion de type « émoticône », un format d'échange d'images (plus connu sous l'acronyme GIF pour « Graphics Interchange Format »), un mot/terme ou un groupe de mots/termes ou encore une vidéo.

Ce procédé comprend une étape d'estimation 10 par au moins une unité de traitement 6 de chaque montre connectée 1, d'au moins une caractéristique de diffusion de chaque écran 3 d'affichage dans ladite interface d'affichage qu'ils forment ensemble.

Cette étape 10 comprend une sous-étape d'établissement 11 de données de mesure relatives à au moins une des caractéristiques de diffusion, effectuée par chaque montre connectée 1. La caractéristique de diffusion comprend de manière non limitative et non exhaustive :
- une caractéristique de localisation de la montre 1 relativement aux autres montres connectées 1 dont les écrans secondaires 3 forment l'interface d'affichage et/ou
- une caractéristique d'orientation de l'écran 3 de ladite montre connectée 1 par l'orientation des écrans secondaires de ces montres.

De telles caractéristiques visent à identifier/évaluer les propriétés de diffusion de chaque écran 3 afin de configurer de manière optimale les paramètres de diffusion de l'interface d'affichage constituée de ces écrans 3. Autrement dit, on comprend par exemple qu'un écran 3 peut être activé/désactivé c'est-à-dire qu'il est apte à diffuser ou à ne pas diffuser une portion du message visuel en fonction de sa position et/ou de son orientation.

Une telle sous-étape 11 prévoit alors une phase d'évaluation 12 mise en œuvre par l'unité de traitement 6 connectée à un module de capture de positionnement 7 de chaque montre 1. Lors cette phase 12, des opérations de mesure sont réalisées afin d'évaluer la position de chaque montre 1 relativement à d'autres montres connectées 1 qui sont situées dans son environnement immédiat. Ce module de capture de positionnement 7 de la montre connectée 1 est apte à détecter les autres montres connectées 1 qui sont agencées dans son environnement immédiat c'est-à-dire les autres montres 1 qui sont proches d'elle ou à proximité d'elle. De plus, ce module 7 de la montre connectée 1 est apte à déterminer la distance qui le sépare des autres montres 1 et à positionner chacune des autres montres 1 qui sont proches d'elle par rapport/relativement à sa propre position. Pour ce faire un tel module 1 peut mettre en œuvre :
- une technologie de type Bluetooth^{™} à basse consommation encore appelée en anglais « Bluetooth low energy » et plus connue sous l'acronyme « BLE » et en particulier une fonctionnalité de cette technologie dite de radiogoniométrie, et/ou
- une technologie de type Ultra Large Bande connue sous l'acronyme en francais « ULB » et en anglais UWB « ultra wideband ».

La sous-étape d'établissement 11 comprend aussi une phase d'estimation 13 de l'orientation de l'écran 3 de chaque montre 1. Une telle phase 13 permet notamment d'identifier la direction de diffusion de cet écran 3 de chaque montre 1. Une telle phase 13 est mise en œuvre par l'unité de traitement 6 et un module de mesure de l'orientation 8 de l'écran 3 connecté à cette unité 6. Ce module de mesure 8 peut comprendre un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes.

Par la suite, le procédé comprend une étape de transmission 14 par les montres connectées 1 desdites données de mesure à un serveur de gestion 2 de l'interface d'affichage. Lors de cette étape 14, l'unité de traitement 6 en étant connectée à une interface de communication de chaque montre connectée 1, envoie à ce serveur de gestion 2 ces données via un réseau de communication, de telles données de mesure comprenant les caractéristiques de localisation et d'orientation. Ces données reçues par le serveur 2 sont ensuite archivées dans des éléments de mémoire 9 de ce serveur 2.

Le procédé comprend ensuite une étape de gestion de l'affichage 15 d'un message visuel sur ladite interface d'affichage comprenant une sous-étape génération 18 de portions dudit message visuel en fonction des données de mesure relatives à au moins une caractéristique de diffusion, chaque portion étant destinée à être affichée sur l'écran 3 de chaque montre connectée 1. Pour ce faire, une telle étape 15 comprend une sous-étape de réalisation 16 d'un message visuel à afficher sur ladite interface d'affichage.

Une telle sous-étape 16 comprend une phase de génération de données de message visuel. Ces données de message visuel participe en la réalisation de ce message. De telles données de message visuel comprennent des données contextuelles relatives à des informations concernant :
- un thème/sujet de l'animation/évènement visuelle et/ou sonore du lieu où le message visuel est susceptible d'être diffusé, et/ou
- des critères de synchronisation ou coordination entre cette animation/évènement et le message visuel à diffuser.

Autrement dit un tel message visuel est de préférence réalisé en relation avec le thème de l'animation/évènement où il sera diffusé en étant par exemple synchronisé ou coordonné avec cette animation visuelle et/ou sonore. Les données de message visuel comprennent aussi des données de définition de message visuel qui sont conçues par une unité de traitement 20 du serveur de gestion 2, par exemple à partir d'une interface de saisie 21 du serveur 2, connectée à l'unité de traitement 20 où il est alors possible de saisir un message ou encore de sélectionner un message prédéfini archivé dans les éléments de mémoire 9 du serveur 2. Par la suite, l'étape de gestion de l'affichage 15 comprend une sous-étape de conception 17 d'une cartographie relative à l'agencement de toutes les montres connectées 1 en particuliers des écrans secondaires 3, les constituants et formant l'interface d'affichage. Cette sous-étape 17 qui est mise en œuvre par l'unité de traitement 20 du serveur 2, comprend une phase de sélection des écrans secondaires 3, qui sont les plus adaptées à la diffusion du message visuel réalisé et ce, au regard de leur orientation, de la distance qui les sépare d'autres écrans 3 et de leur agencement relativement à ces autres écrans 3. Une telle phase de sélection comprend une sous-phase de traitement des données de mesure et de données de message virtuel. On notera que les données de message virtuel participent à définir notamment la nature ou le type de message visuel réalisé à diffuser. Autrement dit, une telle phase de sélection est effectuée à partir des données de mesure et aussi en fonction de la nature ou du type de message visuel réalisé à diffuser. Sur cette base, l'unité de traitement 20 construit alors une représentation virtuelle de l'interface d'affichage sur laquelle le message visuel sera affiché. En complément, on comprend que selon que le message visuel véhicule une information qui doit être lue (par exemple une image contenant des objets ou un texte) et perçue par un individu la distance entre les écrans 3 et leur orientation sont des paramètres qui sont appréciés de manière plus restrictive pour permettre cette lecture que pour un message visuel qui vise à créer des effets de lumière.

Dans ces conditions, suite à la réalisation de cette sous-étape 17, la sous-étape génération 18 prévoit alors lors de son déroulement que l'unité de traitement 20 du serveur 2, identifie à partir de la cartographie relative à l'agencement les écrans 3 constituant l'interface d'affichage, les écrans 3 qui sont aptes à diffuser ledit message visuel. Par la suite, cette unité de traitement 20 effectue des opérations de séparation/division du message visuel en autant de portion qu'il y a d'écrans 3 pour assurer la diffusion du message visuel sur l'interface visuelle. Ces portions sont ensuite transmises aux montres connectées 1 correspondantes via les interfaces de communication du serveur 2 et des montres connectées 1.

On notera que les portions peuvent avoir un contenu similaire, par exemple dans le cas où le message visuel porte sur des effets de lumière en phase et coordonnées.

Le procédé comprend ensuite une étape de diffusion 19 des portions dudit message visuel sur chaque écran 3 de montre connectée 1 constituant cette interface d'affichage notamment en fonction de leur agencement dans cette interface.

On comprend que les étapes 10 à 19 de ce procédé sont répétées autant de fois qu'il est nécessaire pour assurer une diffusion optimale du message visuel et ce, afin notamment de prendre en compte les nombreux mouvements que peuvent effectuer les utilisateurs de ses montres connectées 1 portées souvent sur une partie du corps en mouvement ou susceptible d'être en mouvement de ces utilisateurs comme les poignets.

L'invention concerne aussi un programme d'ordinateur comprenant des instructions de code de programme pour l'exécution des étapes 10 à 19 du procédé lorsque ledit programme est exécuté par les unités de traitement d'une montre connectée 1 et d'un serveur de gestion 2 de l'interface d'affichage.

## Revendications

1. Procédé de gestion d'une interface d'affichage formée d'une pluralité d'écrans (3) d'affichage de montres connectées (1) portées sur des parties du corps d'utilisateurs lesquelles parties sont susceptibles d'être en mouvement ou sont en mouvement, lesdites montres (1) étant susceptibles d'être en mouvement ou sont en mouvement les unes par rapport aux autres et étant localisées à proximité les unes des autres, le procédé comprenant les étapes suivantes :
• estimation (10) d'au moins une caractéristique de diffusion de chaque écran (3) d'affichage dans ladite interface d'affichage qu'ils forment ensemble ;
• gestion de l'affichage (15) d'un message visuel sur ladite interface d'affichage comprenant une sous-étape génération (18) de portions dudit message visuel en fonction de données de mesure relatives à au moins une caractéristique de diffusion comprenant une caractéristique de localisation de chaque montre (1) relativement aux autres montres connectées (1) dont les écrans 3 forment l'interface d'affichage et une caractéristique d'orientation de l'écran (3) de ladite montre connectée (1), chaque portion étant destinée à être affichée sur l'écran (3) de chaque montre connectée (1), et
• diffusion (19) des portions dudit message sur chaque écran (3) constituant cette interface d'affichage ;
ladite étape de gestion de l'affichage (15) comprenant une sous-étape de conception (17) d'une cartographie relative à la position de toutes les montres connectées (1) et en particuliers des écrans (3) les constituants et formant l'interface d'affichage, ladite sous-étape de conception (17) comprenant une phase de sélection des écrans (3) qui sont les plus adaptées à la diffusion du message visuel réalisé en fonction de leur orientation et de la distance qui les sépare des autres écrans (3), la pluralité d'écrans (3) d'affichage de montres connectées étant des écrans secondaires de ces montres connectées, chacun de ces écrans (3) étant susceptible d'être agencé dans le bracelet de la montre correspondante, les montres connectées comprenant chacune un écran principal dédié à l'affichage d'informations destinées spécifiquement ou exclusivement à l'utilisateur de ladite montre.

2. Procédé selon la revendication précédente, **caractérisé en ce que** l'étape d'estimation (10) comprend une sous-étape d'établissement (11) par chaque montre connectée (1) desdites données de mesure relatives à au moins une caractéristique de diffusion comprenant :
• au moins une caractéristique de localisation de ladite montre relativement aux autres montres connectées (1) dont les écrans (3) forment l'interface d'affichage, et/ou
• au moins une caractéristique d'orientation de l'écran (3) de ladite montre connectée.

3. Procédé selon la revendication précédente, **caractérisé en ce que** la sous-étape d'établissement (11) comprend une phase d'évaluation (12) de la position de chaque montre (1) relativement à d'autres montres connectées (1) qui sont situées dans son environnement immédiat.

4. Procédé selon la revendication précédente, **caractérisé en ce que** la sous-étape d'établissement (11) comprend une phase d'estimation (13) de l'orientation de l'écran (3) de chaque montre.

5. Procédé selon l'une quelconque des revendications 2 à 4, **caractérisé en ce que** l'étape d'estimation comprend une sous-étape de transmission (14) par les montres connectées (1) desdites données de mesure à un serveur de gestion de l'interface d'affichage.

6. Procédé selon l'une quelconque des revendications précédentes, **caractérisé en ce que** l'étape de gestion de l'affichage (15) comprend une sous-étape de réalisation (16) du message visuel à afficher sur ladite interface d'affichage.

7. Procédé selon l'une quelconque des revendications précédentes, **caractérisé en ce que** les écrans (3) des montres connectées (1) sont chacun spécifiquement dédié et configuré pour l'affichage d'une portion de message visuel transmis par le serveur de gestion.

8. Procédé selon l'une quelconque des revendications précédentes, **caractérisé en ce que** les écrans (3) des montres connectées (1) ont chacun pour unique fonction d'afficher une portion du message visuel transmis par le serveur de gestion.

9. Procédé selon l'une quelconque des revendications précédentes, **caractérisé en ce que** les écrans (3) des montres connectées (1) ont chacun pour unique fonction et/ou destination de constituer ladite interface d'affichage.

10. Programme d'ordinateur comprenant des instructions de code de programme pour l'exécution des étapes du procédé selon l'une quelconque des revendications 1 à 9 lorsque ledit programme est exécuté par les unités de traitement (6, 20) d'une montre connectée (1) et d'un serveur de gestion (2) de l'interface d'affichage.

## Patentansprüche

1. Verfahren zum Verwalten einer Anzeigeschnittstelle, die aus einer Vielzahl von Bildschirmen (3) zum Anzeigen von intelligenten Uhren (1) gebildet ist, die an Körperteilen von Benutzern getragen werden, wobei die Teile in Bewegung sein können oder in Bewegung sind, wobei die Uhren (1) sich im Verhältnis zueinander in Bewegung sein können oder in Bewegung sind und sich in der Nähe voneinander befinden, wobei das Verfahren die folgenden Schritte umfasst:
• Schätzen (10) von mindestens einem Übertragungsmerkmal jedes Anzeigebildschirms (3) in der Anzeigeschnittstelle, die sie zusammen bilden;
• Verwalten der Anzeige (15) einer visuellen Meldung auf der Anzeigeschnittstelle, die einen Unterschritt des Erzeugens (18) von Teilen der visuellen Meldung in Abhängigkeit von Messdaten in Bezug auf mindestens ein Übertragungsmerkmal umfasst, das ein Lokalisierungsmerkmal jeder Uhr (1) in Bezug auf die anderen intelligenten Uhren (1) umfasst, deren Bildschirme 3 die Anzeigeschnittstelle und ein Ausrichtungsmerkmal des Bildschirms (3) der intelligenten Uhr (1) bilden, wobei jeder Teil dazu bestimmt ist, auf dem Bildschirm (3) jeder intelligenten Uhr (1) angezeigt zu werden, und
• Übertragen (19) der Teile der Meldung auf jedem Bildschirm (3), der die Anzeigeschnittstelle bildet;
wobei der Schritt des Verwaltens der Anzeige (15) einen Unterschritt des Entwerfens (17) einer Kartierung in Bezug auf die Position aller intelligenten Uhren (1) und insbesondere die Bildschirme (3), aus denen sie bestehen und die die Anzeigeschnittstelle bilden, umfasst, wobei der Unterschritt des Entwerfens (17) eine Phase des Auswählens der Bildschirme (3) umfasst, die am besten für das Übertragen der visuellen Meldung geeignet sind, die in Abhängigkeit von ihrer Ausrichtung und dem Abstand zwischen ihnen und den anderen Bildschirmen (3) erfolgt, wobei die Vielzahl von Bildschirmen (3) zur Anzeige von intelligenten Uhren sekundäre Bildschirme der intelligenten Uhren sind, wobei jeder der Bildschirme (3) in dem Armband der entsprechenden Uhr angeordnet werden kann, wobei die intelligenten Uhren jeweils einen Hauptbildschirm umfassen, der für das Anzeigen von Informationen vorgesehen ist, die speziell oder ausschließlich für den Benutzer der Uhr bestimmt sind.

2. Verfahren nach dem vorhergehenden Anspruch, **dadurch gekennzeichnet, dass** der Schritt des Schätzens (10) einen Unterschritt des Aufstellens (11) der Messdaten in Bezug auf mindestens ein Übertragungsmerkmals durch jede intelligente Uhr (1) umfasst, das Folgendes umfasst:
• mindestens ein Lokalisierungsmerkmal der Uhr in Bezug auf die anderen intelligenten Uhren (1), deren Bildschirme (3) die Anzeigeschnittstelle bilden, und/oder
• mindestens ein Ausrichtungsmerkmal des Bildschirms (3) der intelligenten Uhr.

3. Verfahren nach dem vorhergehenden Anspruch, **dadurch gekennzeichnet, dass** der Unterschritt des Aufstellens (11) eine Phase des Auswertens (12) der Position jeder Uhr (1) in Bezug auf andere intelligente Uhren (1) umfasst, die sich in ihrer unmittelbaren Umgebung befinden.

4. Verfahren nach dem vorhergehenden Anspruch, **dadurch gekennzeichnet, dass** der Unterschritt des Aufstellens (11) eine Phase des Schätzens (13) der Ausrichtung des Bildschirms (3) jeder Uhr umfasst.

5. Verfahren nach einem der Ansprüche 2 bis 4, **dadurch gekennzeichnet, dass** der Schritt des Schätzens einen Unterschritt (14) des Sendens der Messdaten an einen Verwaltungsserver für die Anzeigeschnittstelle durch die intelligenten Uhren (1) umfasst.

6. Verfahren nach einem der vorhergehenden Ansprüche, **dadurch gekennzeichnet, dass** der Schritt des Verwaltens der Anzeige (15) einen Unterschritt des Erstellens (16) der auf der Anzeigeschnittstelle anzuzeigenden visuellen Meldung umfasst.

7. Verfahren nach einem der vorhergehenden Ansprüche, **dadurch gekennzeichnet, dass** die Bildschirme (3) der intelligenten Uhren (1) jeweils speziell für das Anzeigen eines vom Verwaltungsserver gesendeten Teils einer visuellen Meldung vorgesehen und konfiguriert sind.

8. Verfahren nach einem der vorhergehenden Ansprüche, **dadurch gekennzeichnet, dass** die Bildschirme (3) der intelligenten Uhren (1) jeweils die einzige Funktion haben, einen Teil der vom Verwaltungsserver gesendeten visuellen Meldung anzuzeigen.

9. Verfahren nach einem der vorhergehenden Ansprüche, **dadurch gekennzeichnet, dass** die Bildschirme (3) der intelligenten Uhren (1) jeweils die einzige Funktion und/oder Bestimmung haben, die Anzeigeschnittstelle zu bilden.

10. Computerprogramm, das Programmcodeanweisungen zum Ausführen der Verfahrensschritte nach einem der Ansprüche 1 bis 9 umfasst, wenn das Programm von den Verarbeitungseinheiten (6, 20) einer intelligenten Uhr (1) und eines Verwaltungsservers (2) der Anzeigeschnittstelle ausgeführt wird.

## Claims

1. Method for managing a display interface formed of a plurality of display screens (3) of smartwatches (1) worn on parts of the body of users, which parts are capable of moving or are moving, said watches (1) being capable of moving or moving with respect to one another and being located in proximity of one another, the method comprising the following steps:
• estimating (10) at least one broadcasting property of each display screen (3) in said display interface which they form together;
• managing the display (15) of a visual message on the display interface comprising a substep (18) of generating portions of said visual message as a function of measurement data relating to at least one broadcasting property comprising a location property of each watch (1) relative to the other smartwatches (1), the screens 3 of which form the display interface and an orientation property of the screen (3) of said smartwatch (1), each portion being intended to be displayed on the screen (3) of each smartwatch (1); and
• broadcasting (19) portions of said message on each screen (3) constituting this display interface;
said display management step (15) comprising a substep (17) of designing a mapping relating to the position of all the smartwatches (1) and in particular of the screens (3) constituting and forming the display interface, said design substep (17) comprising a phase of selecting screens (3) which are most suitable for broadcasting the visual message produced, as a function of their orientation and of the distance which separates them from the other screens (3), the plurality of smartwatch display screens (3) being secondary screens of these smartwatches, each of these screens (3) being able to be arranged in the corresponding watch strap, the smartwatches each comprising a main screen dedicated to the display of information specifically or exclusively intended for the user of said watch.

2. Method according to the preceding claim, **characterised in that** the estimation step (10) comprises a substep (11) of establishing, by each smartwatch (1), said measurement data relating to at least one broadcasting property comprising:
• at least one location property of said watch relative to the other smartwatches (1), the screens (3) of which form the display interface, and/or
• at least one orientation property of the screen (3) of said smartwatch.

3. Method according to the preceding claim, **characterised in that** the establishment substep (11) comprises a phase (12) of evaluating the position of each watch (1) relative to other smartwatches (1) which are located in its immediate environment.

4. Method according to the preceding claim, **characterised in that** the establishment substep (11) comprises a phase (13) of estimating the orientation of the screen (3) of each watch.

5. Method according to any one of claims 2 to 4, **characterised in that** the estimation step comprises a substep (14) of transmission by the smartwatches (1) of said measurement data to a management server of the display interface.

6. Method according to any one of the preceding claims, **characterised in that** the display management step (15) comprises a substep (16) of producing the visual message to be displayed on said display interface.

7. Method according to any one of the preceding claims, **characterised in that** the screens (3) of the smartwatches (1) are each specifically dedicated to and configured for the display of a portion of visual message transmitted by the management server.

8. Method according to any one of the preceding claims, **characterised in that** the screens (3) of the smartwatches (1) each have the sole function of displaying a portion of the visual message transmitted by the management server.

9. Method according to any one of the preceding claims, **characterised in that** the screens (3) of the smartwatches (1) each have the sole function and/or purpose of constituting said display interface.

10. Computer program comprising program code instructions for executing steps of a method according to any one of claims 1 to 11, when said program is executed by processing units (6, 20) of a smartwatch (1) and a management server (2) of the display interface.
